# EUROPEAN PATENT APPLICATION

(11) **EP 4 447 329 A1**
(43) Date of publication of application: **16.10.2024**
(21) Application number: 22914986.9
(22) Date of filing: 28.12.2022
(51) Int. Cl.: H04B 1/40, H04B 17/309

(54) **INFORMATION TRANSMISSION METHOD, RADIO FREQUENCY APPARATUS AND CONTROL APPARATUS**

(30) Priority: 31.12.2021 CN 202111677327
(71) Applicant: Huawei Technologies Co., Ltd., Shenzhen, Guangdong 518129 (CN)
(72) Inventor: JIN, Yihua, Shenzhen, Guangdong 518129 (CN); MA, Yue, Shenzhen, Guangdong 518129 (CN)
(74) Representative: Gill Jennings & Every LLP
(86) International application number: PCT/CN2022/143062
(87) International publication number: WO 2023/125736

(57) **Abstract**

This application provides an information transmission method, a radio frequency apparatus, and a control apparatus. The method includes: The radio frequency apparatus receives indication information from the control apparatus, where the indication information indicates the radio frequency apparatus to collect time domain data. The radio frequency apparatus sends frequency domain amplitude information to the control apparatus in response to the indication information, where the frequency domain amplitude information includes information about a frequency domain amplitude corresponding to each of at least one corresponding frequency channel number for collecting the time domain data. Therefore, communication efficiency can be improved.

## Description

This application claims priority to Chinese Patent Application No. 202111677327.9, filed with the China National Intellectual Property Administration on December 31, 2021 and entitled "INFORMATION TRANSMISSION METHOD, RADIO FREQUENCY APPARATUS, AND CONTROL APPARATUS", which is incorporated herein by reference in its entirety.

### TECHNICAL FIELD

This application relates to the field of communication technologies, and more specifically, to an information transmission method, a radio frequency apparatus, and a control apparatus.

### BACKGROUND

With development of communication technologies, there are more network stations in a communication system. To ensure reliable information transmission, interference detection in the communication system becomes particularly important. Currently, a base station may detect strength of a received signal, for example, detect powers of two signals, and determine, based on a power difference obtained by comparing the two signals, whether interference exists. However, in the current interference detection solution, transmission of service data needs to be suspended during detection. As a result, communication efficiency is reduced.

Therefore, an information transmission method, a radio frequency apparatus, and a control apparatus are urgently needed, to improve the communication efficiency.

### SUMMARY

This application provides an information transmission method, a radio frequency apparatus, and a control apparatus, to improve communication efficiency.

According to a first aspect, an information transmission method is provided. The method may be performed by a radio frequency apparatus or a chip in the radio frequency apparatus. The method includes: A radio frequency apparatus receives indication information from a control apparatus, where the indication information indicates the radio frequency apparatus to collect time domain data. The radio frequency apparatus sends frequency domain amplitude information to the control apparatus in response to the indication information, where the frequency domain amplitude information includes information about a frequency domain amplitude corresponding to each of at least one corresponding frequency channel number for collecting the time domain data.

Therefore, in this application, the radio frequency apparatus may collect the time domain data based on the indication information, convert the time domain data into frequency domain data to generate the frequency domain amplitude information, and send the frequency domain amplitude information to the control apparatus. In this way, interference detection can be performed based on the frequency domain amplitude information, and communication efficiency is improved.

According to the first aspect, in some implementations of the first aspect, the indication information further indicates a collection frequency for collecting the time domain data and/or a quantity of collection points for collecting the time domain data.

Therefore, in this application, the radio frequency apparatus may collect the time domain data on at least one collection point based on the indication information, thereby improving communication flexibility.

According to the first aspect, in some implementations of the first aspect, the indication information further indicates a start frequency and an end frequency of the at least one frequency channel number.

Therefore, in this application, the radio frequency apparatus may send, to the control apparatus, a frequency domain amplitude of the frequency channel number indicated by the indication information, thereby reducing a waste of transmission resources and improving resource utilization.

According to the first aspect, in some implementations of the first aspect, the indication information further indicates a channel corresponding to the time domain data.

Therefore, in this application, the radio frequency apparatus may collect the time domain data on the channel indicated by the indication information, thereby improving communication flexibility.

According to the first aspect, in some implementations of the first aspect, the indication information further indicates the radio frequency apparatus to divide the time domain data into a plurality of data packets to be sent periodically, and the method further includes: The radio frequency apparatus periodically sends the plurality of data packets to the control apparatus.

According to the first aspect, in some implementations of the first aspect, the indication information further indicates a sending periodicity of the plurality of data packets, and/or the indication information further indicates a data amount of the data packet.

Therefore, in this application, the radio frequency apparatus may periodically send the time domain data in a form of the packets to the control apparatus based on the indication information, thereby reducing pressure of the control apparatus for processing data, and improving communication reliability.

According to the first aspect, in some implementations of the first aspect, before the radio frequency apparatus sends frequency domain amplitude information to the control apparatus in response to the indication information, the method further includes: The radio frequency apparatus determines the frequency domain amplitude information based on the indication information and gain compensation information, where the gain compensation information includes at least one of the following information: gain compensation corresponding to each of the at least one frequency channel number, and mean gain compensation corresponding to the time domain data.

Therefore, in this application, the radio frequency apparatus may perform, based on the frequency domain compensation information, gain compensation on the frequency domain data converted from the time domain data, to improve reliability of information transmission.

According to a second aspect, an information transmission method is provided. The method may be performed by a control apparatus or a chip in the control apparatus. The method includes: The control apparatus sends indication information to a radio frequency apparatus, where the indication information indicates to collect time domain data. The control apparatus receives, from the radio frequency apparatus, frequency domain amplitude information that responds to the indication information, where the frequency domain amplitude information includes information about a frequency domain amplitude corresponding to each of at least one corresponding frequency channel number for collecting the time domain data.

Therefore, in this application, the radio frequency apparatus may collect the time domain data based on the indication information, convert the time domain data into frequency domain data to generate the frequency domain amplitude information, and send the frequency domain amplitude information to the control apparatus. In this way, interference detection can be performed based on the frequency domain amplitude information, and communication efficiency is improved.

According to the second aspect, in some implementations of the second aspect, the indication information further indicates a collection frequency for collecting the time domain data and/or a quantity of collection points for collecting the time domain data.

According to the second aspect, in some implementations of the second aspect, the indication information further indicates a start frequency and an end frequency of the at least one frequency channel number.

According to the second aspect, in some implementations of the second aspect, the indication information further indicates a channel corresponding to the time domain data.

According to the second aspect, in some implementations of the second aspect, the indication information further indicates to divide the time domain data into a plurality of data packets to be sent periodically, and the method further includes: The control apparatus periodically receives the plurality of data packets from the radio frequency apparatus.

According to the second aspect, in some implementations of the second aspect, the indication information further indicates a sending periodicity of the plurality of data packets, and/or the indication information further indicates a data amount of the data packet.

According to a third aspect, an information transmission method is provided. The method may be performed by a radio frequency apparatus or a chip in the radio frequency apparatus. The method includes: The radio frequency apparatus receives indication information from a control apparatus, where the indication information indicates the radio frequency apparatus to collect time domain data. The radio frequency apparatus sends time domain data information to the control apparatus in response to the indication information, where the time domain data information includes the time domain data, and the time domain data information is used for determining a frequency domain amplitude of at least one frequency channel number.

Therefore, in this embodiment of this application, the radio frequency apparatus may collect the time domain data based on the indication information sent by the control apparatus, and send the generated time domain data information to the control apparatus. The control apparatus may convert the time domain data into frequency domain data to generate the frequency domain amplitude of the at least one frequency channel number. In this way, interference detection can be performed based on the frequency domain amplitude, and communication efficiency is improved.

According to the third aspect, in some implementations of the third aspect, the indication information further indicates a collection frequency for collecting the time domain data and/or a quantity of collection points for collecting the time domain data.

Therefore, in this application, the radio frequency apparatus may collect the time domain data on at least one collection point based on the indication information, thereby improving communication flexibility.

According to the third aspect, in some implementations of the third aspect, the indication information further indicates a channel corresponding to the time domain data.

Therefore, in this application, the radio frequency apparatus may collect the time domain data on the channel indicated by the indication information, thereby improving communication flexibility.

According to the third aspect, in some implementations of the third aspect, the indication information further indicates the radio frequency apparatus to divide the time domain data into a plurality of data packets to be sent periodically. That the radio frequency apparatus sends time domain data information to the control apparatus in response to the indication information includes: The radio frequency apparatus periodically sends the plurality of data packets to the control apparatus.

According to the third aspect, in some implementations of the third aspect, the indication information further indicates a sending periodicity of the plurality of data packets, and/or the indication information further indicates a data amount of the data packet.

Therefore, in this application, the radio frequency apparatus may periodically send the time domain data in a form of the packets to the control apparatus based on the indication information, thereby reducing pressure of the control apparatus for processing data, and improving communication reliability.

According to the third aspect, in some implementations of the third aspect, the method further includes: The radio frequency apparatus sends gain compensation information to the control apparatus, where the gain compensation information is used for determining the frequency domain amplitude, and the gain compensation information includes at least one of the following information: gain compensation corresponding to each of the at least one frequency channel number, and mean gain compensation corresponding to the time domain data.

Therefore, in this application, the control apparatus may perform, based on the frequency domain compensation information, gain compensation on the frequency domain data converted from the time domain data, to improve reliability of information transmission.

According to the third aspect, in some implementations of the third aspect, the time domain data information further includes at least one of the following: a frequency for collecting the time domain data, a start frequency for collecting the time domain data, an end frequency for collecting the time domain data, a data format of the time domain data, a channel identifier corresponding to the time domain data, and an antenna identifier corresponding to the time domain data.

Therefore, in this application, the time domain data information sent by the radio frequency apparatus may include a plurality of types of information used for determining the frequency domain amplitude, thereby improving reliability of information transmission.

According to a fourth aspect, an information transmission method is provided. The method may be performed by a control apparatus or a chip in the control apparatus. The method includes: The control apparatus sends indication information to a radio frequency apparatus, where the indication information indicates to collect time domain data. The control apparatus receives, from the radio frequency apparatus, time domain data information that responds to the indication information, where the time domain data information includes the time domain data, and the time domain data information is used for determining a frequency domain amplitude of at least one frequency channel number.

Therefore, in this embodiment of this application, the radio frequency apparatus may collect the time domain data based on the indication information sent by the control apparatus, and send the generated time domain data information to the control apparatus. The control apparatus may convert the time domain data into frequency domain data to generate the frequency domain amplitude of the at least one frequency channel number. In this way, interference detection can be performed based on the frequency domain amplitude, and communication efficiency is improved.

According to the fourth aspect, in some implementations of the fourth aspect, the indication information further indicates a collection frequency for collecting the time domain data and/or a quantity of collection points for collecting the time domain data.

According to the fourth aspect, in some implementations of the fourth aspect, the indication information further indicates a channel corresponding to the time domain data.

According to the fourth aspect, in some implementations of the fourth aspect, the indication information further indicates to divide the time domain data into a plurality of data packets to be sent periodically. That the control apparatus receives, from the radio frequency apparatus, time domain data information that responds to the indication information includes: The control apparatus periodically receives the plurality of data packets from the radio frequency apparatus.

According to the fourth aspect, in some implementations of the fourth aspect, the indication information further indicates a sending periodicity of the plurality of data packets, and/or the indication information further indicates a data amount of the data packet.

According to the fourth aspect, in some implementations of the fourth aspect, the method further includes: The control apparatus receives gain compensation information from the radio frequency apparatus, where the gain compensation information is used for determining the frequency domain amplitude, and the gain compensation information includes at least one of the following information: gain compensation corresponding to each of the at least one frequency channel number, and mean gain compensation corresponding to the time domain data.

According to the fourth aspect, in some implementations of the fourth aspect, the time domain data information further includes at least one of the following: a frequency for collecting the time domain data, a start frequency for collecting the time domain data, an end frequency for collecting the time domain data, a data format of the time domain data, a channel identifier corresponding to the time domain data, and an antenna identifier corresponding to the time domain data.

According to a fifth aspect, a radio frequency apparatus is provided. The radio frequency apparatus includes a sending unit and a receiving unit. The receiving unit is configured to receive indication information. The indication information indicates the radio frequency apparatus to collect time domain data. The sending unit is configured to send frequency domain amplitude information to the control apparatus in response to the indication information. The frequency domain amplitude information includes information about a frequency domain amplitude corresponding to each of at least one corresponding frequency channel number for collecting the time domain data.

Therefore, in this application, the radio frequency apparatus may collect the time domain data based on the indication information, convert the time domain data into frequency domain data to generate the frequency domain amplitude information, and send the frequency domain amplitude information to the control apparatus. In this way, interference detection can be performed based on the frequency domain amplitude information, and communication efficiency is improved.

According to the fifth aspect, in some implementations of the fifth aspect, the indication information further indicates a collection frequency for collecting the time domain data and/or a quantity of collection points for collecting the time domain data.

According to the fifth aspect, in some implementations of the fifth aspect, the indication information further indicates a start frequency and an end frequency of the at least one frequency channel number.

According to the fifth aspect, in some implementations of the fifth aspect, the indication information further indicates a channel corresponding to the time domain data.

According to the fifth aspect, in some implementations of the fifth aspect, the indication information further indicates the radio frequency apparatus to divide the time domain data into a plurality of data packets to be sent periodically. The sending unit is further configured to periodically send the plurality of data packets to the control apparatus.

According to the fifth aspect, in some implementations of the fifth aspect, the indication information further indicates a sending periodicity of the plurality of data packets, and/or the indication information further indicates a data amount of the data packet.

According to the fifth aspect, in some implementations of the fifth aspect, the apparatus further includes a processing unit. Before the sending unit is configured to send the frequency domain amplitude information to the control apparatus in response to the indication information, the processing unit is configured to determine the frequency domain amplitude information based on the indication information and the gain compensation information. The gain compensation information includes at least one of the following information: gain compensation corresponding to each of the at least one frequency channel number, and mean gain compensation corresponding to the time domain data.

According to a sixth aspect, a control apparatus is provided. The apparatus includes a sending unit and a receiving unit. The sending unit is configured to send indication information to a radio frequency apparatus. The indication information indicates to collect time domain data. The receiving unit is configured to receive, from the radio frequency apparatus, frequency domain amplitude information in response to the indication information, where the frequency domain amplitude information includes information about a frequency domain amplitude corresponding to each of at least one corresponding frequency channel number for collecting time domain data.

Therefore, in this application, the radio frequency apparatus may collect the time domain data based on the indication information, convert the time domain data into frequency domain data to generate the frequency domain amplitude information, and send the frequency domain amplitude information to the control apparatus. In this way, interference detection can be performed based on the frequency domain amplitude information, and communication efficiency is improved.

According to the sixth aspect, in some implementations of the sixth aspect, the indication information further indicates a collection frequency for collecting the time domain data and/or a quantity of collection points for collecting the time domain data.

According to the sixth aspect, in some implementations of the sixth aspect, the indication information further indicates a start frequency and an end frequency of the at least one frequency channel number.

According to the sixth aspect, in some implementations of the sixth aspect, the indication information further indicates a channel corresponding to the time domain data.

According to the sixth aspect, in some implementations of the sixth aspect, the indication information further indicates to divide the time domain data into a plurality of data packets to be sent periodically. The receiving unit is further configured to periodically receive the plurality of data packets from the radio frequency apparatus.

According to the sixth aspect, in some implementations of the sixth aspect, the indication information further indicates a sending periodicity of the plurality of data packets, and/or the indication information further indicates a data amount of the data packet.

According to a seventh aspect, a radio frequency apparatus is provided. The apparatus includes a sending unit and a receiving unit. The receiving unit is configured to receive indication information from a control apparatus. The indication information indicates the radio frequency apparatus to collect time domain data. The sending unit is configured to send time domain data information to the control apparatus in response to the indication information, where the time domain data information includes the time domain data, and the time domain data information is used for determining a frequency domain amplitude of at least one frequency channel number.

Therefore, in this embodiment of this application, the radio frequency apparatus may collect the time domain data based on the indication information sent by the control apparatus, and send the generated time domain data information to the control apparatus. The control apparatus may convert the time domain data into frequency domain data to generate the frequency domain amplitude of the at least one frequency channel number. In this way, interference detection can be performed based on the frequency domain amplitude, and communication efficiency is improved.

According to the seventh aspect, in some implementations of the seventh aspect, the indication information further indicates a collection frequency for collecting the time domain data and/or a quantity of collection points for collecting the time domain data.

According to the seventh aspect, in some implementations of the seventh aspect, the indication information further indicates a channel corresponding to the time domain data.

According to the seventh aspect, in some implementations of the seventh aspect, the indication information further indicates the radio frequency apparatus to divide the time domain data into a plurality of data packets to be sent periodically. The sending unit is specifically configured to periodically send the plurality of data packets to the control apparatus.

According to the seventh aspect, in some implementations of the seventh aspect, the indication information further indicates a sending periodicity of the plurality of data packets, and/or the indication information further indicates a data amount of the data packet.

According to the seventh aspect, in some implementations of the seventh aspect, the sending unit is further configured to send gain compensation information to the control apparatus. The gain compensation information is used for determining a frequency domain amplitude. The gain compensation information includes at least one of the following information: gain compensation corresponding to each of the at least one frequency channel number, and mean gain compensation corresponding to the time domain data.

According to the seventh aspect, in some implementations of the seventh aspect, the time domain data information further includes at least one of the following: a frequency for collecting the time domain data, a start frequency for collecting the time domain data, an end frequency for collecting the time domain data, a data format of the time domain data, a channel identifier corresponding to the time domain data, and an antenna identifier corresponding to the time domain data.

According to an eighth aspect, a control apparatus is provided. The apparatus includes a sending unit and a receiving unit. The sending unit is configured to send indication information to a radio frequency apparatus. The indication information indicates to collect time domain data. The receiving unit is configured to receive, from the radio frequency apparatus, time domain data information that responds to the indication information, where the time domain data information includes the time domain data, and the time domain data information is used for determining a frequency domain amplitude of at least one frequency channel number.

Therefore, in this embodiment of this application, the radio frequency apparatus may collect the time domain data based on the indication information sent by the control apparatus, and send the generated time domain data information to the control apparatus. The control apparatus may convert the time domain data into frequency domain data to generate the frequency domain amplitude of the at least one frequency channel number. In this way, interference detection can be performed based on the frequency domain amplitude, and communication efficiency is improved.

According to the eighth aspect, in some implementations of the eighth aspect, the indication information further indicates a collection frequency for collecting the time domain data and/or a quantity of collection points for collecting the time domain data.

According to the eighth aspect, in some implementations of the eighth aspect, the indication information further indicates a channel corresponding to the time domain data.

According to the eighth aspect, in some implementations of the eighth aspect, the indication information further indicates to divide the time domain data into a plurality of data packets to be sent periodically. The receiving unit is specifically configured to periodically receive the plurality of data packets from the radio frequency apparatus.

According to the eighth aspect, in some implementations of the eighth aspect, the indication information further indicates a sending periodicity of the plurality of data packets, and/or the indication information further indicates a data amount of the data packet.

According to the eighth aspect, in some implementations of the eighth aspect, the receiving unit is further configured to receive gain compensation information from the radio frequency apparatus. The gain compensation information is used for determining a frequency domain amplitude. The gain compensation information includes at least one of the following information: gain compensation corresponding to each of the at least one frequency channel number, and mean gain compensation corresponding to the time domain data.

According to the eighth aspect, in some implementations of the eighth aspect, the time domain data information further includes at least one of the following: a frequency for collecting the time domain data, a start frequency for collecting the time domain data, an end frequency for collecting the time domain data, a data format of the time domain data, a channel identifier corresponding to the time domain data, and an antenna identifier corresponding to the time domain data.

According to a ninth aspect, a communication apparatus is provided. The apparatus may include a processing unit, a sending unit, and a receiving unit. Optionally, the sending unit and the receiving unit may alternatively be a transceiver unit.

When the apparatus is a radio frequency apparatus, the processing unit may be a processor, and the sending unit and the receiving unit may be a transceiver. The apparatus may further include a storage unit. The storage unit may be a memory. The storage unit is configured to store instructions. The processing unit executes the instructions stored in the storage unit, so that the apparatus is enabled to perform any method in the first aspect or the third aspect. When the apparatus is a chip in the radio frequency apparatus, the processing unit may be a processor, and the sending unit and the receiving unit may be an input/output interface, a pin, a circuit, or the like. The processing unit executes the instructions stored in the storage unit, so that the chip is enabled to perform any method in the first aspect or the third aspect. The storage unit is configured to store instructions. The storage unit may be a storage unit (for example, a register or a cache) in the chip, or may be a storage unit located outside the chip in the apparatus (for example, a read-only memory or a random access memory).

When the apparatus is a control apparatus, the processing unit may be a processor, and the sending unit and the receiving unit may be a transceiver. The apparatus may further include a storage unit. The storage unit may be a memory. The storage unit is configured to store instructions. The processing unit executes the instructions stored in the storage unit, so that the apparatus is enabled to perform any method in the second aspect or the fourth aspect. When the apparatus is a chip in the control apparatus, the processing unit may be a processor, and the sending unit and the receiving unit may be an input/output interface, a pin, a circuit, or the like. The processing unit executes the instructions stored in the storage unit, so that the chip is enabled to perform any method in the second aspect or the fourth aspect. The storage unit is configured to store instructions. The storage unit may be a storage unit (for example, a register or a cache) in the chip, or may be a storage unit located outside the chip in the apparatus (for example, a read-only memory or a random access memory).

According to a tenth aspect, this application provides an apparatus, including a processor. The processor is coupled to a memory, and may be configured to execute instructions in the memory, to implement the method in any one of the first aspect or the possible implementations of the first aspect, implement the method in any one of the second aspect or the possible implementations of the second aspect, implement the method in any one of the third aspect or the possible implementations of the third aspect, or implement the method in any one of the fourth aspect or the possible implementations of the fourth aspect. The apparatus further includes the memory. The apparatus further includes a communication interface. The processor is coupled to the communication interface.

In an implementation, the apparatus is a radio frequency apparatus. When the apparatus is a radio frequency apparatus, the communication interface may be a transceiver or an input/output interface.

In another implementation, the apparatus is a chip or a chip system configured in a radio frequency apparatus. When the apparatus is a chip or a chip system configured in a radio frequency apparatus, the communication interface may be an input/output interface.

In an implementation, the apparatus is a control apparatus. When the apparatus is a control apparatus, the communication interface may be a transceiver or an input/output interface.

In another implementation, the apparatus is a chip or a chip system configured in a control apparatus. When the apparatus is a chip or a chip system configured in a control apparatus, the communication interface may be an input/output interface.

The transceiver may be a transceiver circuit. The input/output interface may be an input/output circuit.

According to an eleventh aspect, a computer-readable storage medium is provided. The computer-readable storage medium stores a computer program or instructions. When the computer program or the instructions are executed, the method in any possible implementation of the first aspect or the second aspect is implemented.

According to a twelfth aspect, a computer program product including instructions is provided. When the instructions are run, the method in any possible implementation of the first aspect, the second aspect, the third aspect, or the fourth aspect is implemented.

According to a thirteenth aspect, a computer program is provided. The computer program includes code or instructions. When the code or the instructions are run, the method in any possible implementation of the first aspect, the second aspect, the third aspect, or the fourth aspect is implemented.

According to a fourteenth aspect, a chip system is provided. The chip system includes a processor, and may further include a memory, configured to implement the method in any possible implementation described in the first aspect, the second aspect, the third aspect, or the fourth aspect. The chip system may include a chip, or may include a chip and another discrete device.

According to a fifteenth aspect, a communication system is provided. The system includes the apparatus in any possible implementation of the fifth aspect and the sixth aspect. Alternatively, the system includes the apparatus in any possible implementation of the seventh aspect and the eighth aspect.

In some implementations, the control apparatus is a BU. The radio frequency apparatus is an RU.

### BRIEF DESCRIPTION OF DRAWINGS

FIG. 1 is a schematic diagram of a structure of a communication system to which an embodiment of this application is applicable;
FIG. 2 is a schematic flowchart of an information transmission method according to an embodiment of this application;
FIG. 3 is a schematic spectrum diagram according to an embodiment of this application;
FIG. 4 is a schematic flowchart of another information transmission method according to an embodiment of this application; and
FIG. 5 and FIG. 6 each are a schematic diagram of a structure of a possible apparatus according to an embodiment of this application.

### DESCRIPTION OF EMBODIMENTS

The following describes technical solutions of this application with reference to the accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a 5th generation (5th generation, 5G) system or a new radio (new radio, NR), a 6th generation (6th generation, 6G) system, or a future communication system. A 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine to machine (machine to machine, M2M) communication system, an internet of things (Internet of things, IoT) communication system, a vehicle-to-everything (vehicle-to-everything, V2X) communication system, an uncrewed aerial vehicle (unmanned aerial vehicle, UAV) communication system, or another communication system.

In addition, a network architecture and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

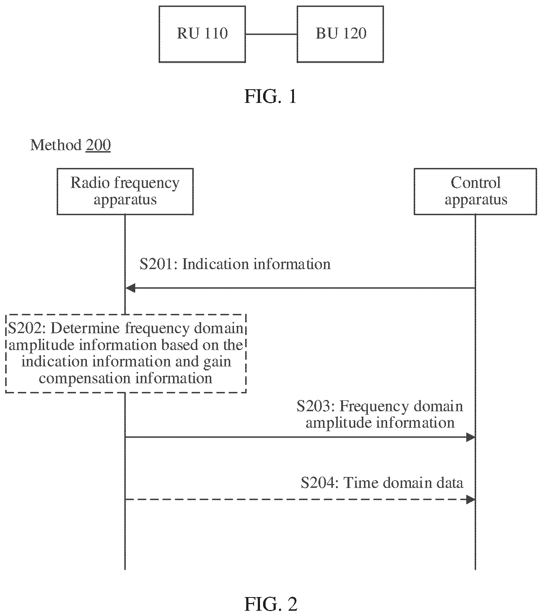

For ease of understanding of embodiments of this application, an application scenario of embodiments of this application is first described in detail with reference to FIG. 1.

FIG. 1 is a schematic diagram of a structure of a communication system to which an embodiment of this application is applicable. An apparatus that may be involved in the communication system is first described.
1. Radio unit (radio unit, RU) 110: The RU 110 may implement functions such as intermediate frequency processing, radio frequency processing, and duplexing of a signal. For example, the RU 110 may be a remote radio unit (remote radio unit, RRU), an active antenna unit (active antenna unit, AAU), or another network element or communication apparatus that has a capability of processing an intermediate frequency signal, a radio frequency signal, or an intermediate radio frequency signal. In some communication systems, for example, in a communication system using an enhanced common public radio interface (enhanced common public radio interface, eCPRI), the RU 110 may further have some baseband processing functions. This is not particularly limited in this application. In addition, an antenna configured to receive and send an electromagnetic wave signal may be further deployed on the RU 110.
2. Baseband unit (baseband unit, BU) 120: The BU 120 may implement a baseband signal processing function. For example, the BU 120 may be a baseband unit (baseband unit, BBU), a central unit (central unit, CU), a distributed unit (distributed unit, DU), or another network element or communication apparatus that has a capability of processing a baseband signal.

A communication interface between the BU 120 and the RU 110 may be referred to as a fronthaul interface. For example, the fronthaul interface may be a common public radio interface (common public radio interface, CPRI), an eCPRI interface, or another future-defined interface configured to connect the BU 120 and the RU 110. This is not particularly limited in this application.

Currently, when the communication system performs interference detection, the communication system suspends transmission of service data, detects powers of two signals, and determines, by obtaining a power difference between the two signals through comparison, whether interference exists. As a result, communication efficiency is low. In embodiments of this application, an information transmission method and an apparatus are provided, to improve communication efficiency. The following first describes the information transmission method.

In the following embodiment, a radio frequency apparatus may be the foregoing RU, and a control apparatus may be the foregoing BU.

FIG. 2 is a schematic flowchart of an information transmission method 200 according to an embodiment of this application.

S201: The control apparatus sends indication information to the radio frequency apparatus, and correspondingly, the radio frequency apparatus receives the indication information from the control apparatus.

Optionally, the indication information indicates the radio frequency apparatus to collect time domain data. In other words, the indication information indicates the radio frequency apparatus to start spectrum scanning on the time domain data.

Optionally, the indication information may indicate the radio frequency apparatus to report frequency domain amplitude information. In other words, the indication information indicates the radio frequency apparatus to collect the time domain data by indicating the radio frequency apparatus to report the frequency domain amplitude information. The frequency domain amplitude information may include information about a frequency domain amplitude corresponding to each of at least one corresponding frequency channel number for collecting the time domain data.

The time domain data may be uplink time domain data received by the radio frequency apparatus through an antenna. For example, the radio frequency apparatus may collect original data of an uplink signal at an entry of an uplink receive channel.

In addition, the control apparatus may send the indication information to the radio frequency apparatus in a trigger manner such as a user instruction or configuration, so that the radio frequency apparatus may collect the time domain data based on the indication information.

It should be understood that the radio frequency apparatus collects the time domain data may be understood as that the radio frequency apparatus records, at a specific collection frequency, time domain data corresponding to at least one collection point. The collection frequency may represent a quantity of collection points at which the radio frequency apparatus collects time domain data per unit time. In this embodiment of this application, a collection frequency domain may alternatively be represented by using a collection periodicity, and the collection periodicity is a time interval in which the radio frequency apparatus collects time domain data at two adjacent collection points.

Optionally, the indication information further indicates a collection frequency for collecting the time domain data and/or a quantity of collection points for collecting the time domain data.

In a first implementation, the indication information may include a corresponding resolution for collecting the time domain data. The radio frequency device may determine a collection frequency and/or a quantity of collection points based on the resolution.

It should be noted that, the radio frequency apparatus may convert the time domain data into frequency domain data, and convert at least one collection point for collecting the time domain data into at least one frequency channel number. The resolution may be a frequency spacing between two neighboring frequency channel numbers in the at least one frequency channel number. A value of the resolution is related to a value obtained by dividing the collection frequency by the quantity of collection points.

For example, the radio frequency apparatus may determine the quantity of collection points based on the resolution. In this case, the radio frequency apparatus may determine a collection frequency based on capability information of the radio frequency apparatus (for example, capability information of collecting data by hardware of the radio frequency apparatus), and then determine a quantity of collection points based on a correspondence between the resolution and the quantity of collection points.

Alternatively, for example, the radio frequency apparatus may determine a collection frequency based on the resolution. For example, the radio frequency apparatus may support a plurality of collection frequencies, and the radio frequency apparatus may determine, based on a value of the resolution, a specific collection frequency to be selected. For example, when a resolution requirement is high, the radio frequency apparatus may select a high collection frequency to collect time domain data. In this case, the radio frequency apparatus may further determine the quantity of collection points based on the foregoing relationship between the resolution and the collection frequency.

In addition, the indication information may explicitly indicate a value of the resolution, or may implicitly indicate a value of the resolution. For example, when a field indicating the resolution in the indication information is empty, it indicates that a default value is used for the resolution. For another example, when the indication information indicates a resolution level, the radio frequency apparatus may determine the value of the resolution based on a preset correspondence between the resolution level and the value of the resolution.

In a second implementation, the indication information may include information about a corresponding collection frequency for collecting time domain data and/or a quantity of collection points for collecting time domain data. To be specific, the control apparatus may explicitly indicate a collection frequency and/or a quantity of collection points for collecting time domain data by the radio frequency apparatus.

For example, the radio frequency apparatus may report, to the control apparatus, the capability information of collecting data by the radio frequency apparatus. The control apparatus determines, based on the capability information, a collection frequency for collecting data and/or a quantity of collection points for collecting time domain data, and indicates the radio frequency apparatus to collect data.

Therefore, the radio frequency apparatus may collect the time domain data at the at least one collection point based on the indication information.

Optionally, the indication information further indicates a channel corresponding to the time domain data.

For example, the indication information includes information about an antenna identifier corresponding to the time domain data, and the radio frequency apparatus may determine, based on a correspondence between the antenna identifier and the channel, a specific channel or specific channels on which the time domain data is to be collected.

For another example, the indication information includes information about a corresponding channel identifier for collecting data, and the radio frequency apparatus collects time domain data on one or more channels indicated by the channel identifier.

Therefore, the radio frequency apparatus may collect time domain data on the channel indicated by the indication information.

Optionally, the radio frequency apparatus determines frequency domain amplitude information based on the indication information, where the frequency domain amplitude information includes information about a frequency domain amplitude corresponding to each of at least one corresponding frequency channel number for collecting the time domain data. The radio frequency apparatus may convert the time domain data into frequency domain data, convert at least one collection point for collecting the time domain data into at least one frequency channel number, and convert time domain data corresponding to the at least one collection point into frequency domain data, to obtain information about a frequency domain amplitude corresponding to the at least one frequency channel number.

The information about the frequency domain amplitude may be a frequency domain amplitude corresponding to the at least one frequency channel number after the time domain data is converted into the frequency domain data. The information about the frequency domain amplitude may alternatively be a frequency domain amplitude obtained after processing (for example, processing such as quantization and correction) is performed on converted frequency domain data. In addition, the information about the frequency domain amplitude information may include a value of the frequency domain amplitude corresponding to the at least one frequency channel number, or the frequency domain amplitude may be indicated by indicating an index of the frequency domain amplitude corresponding to the at least one frequency channel number. This is not particularly limited in this application.

The at least one frequency channel number in the frequency domain amplitude information may include all or a part of frequency channel numbers for converting a collection point into a frequency channel number.

For example, the indication information may further indicate that the frequency domain amplitude information includes information about a frequency domain amplitude of a frequency channel number corresponding to a specific part of collection points. That is, the indication information may further indicate the at least one frequency channel number in the frequency domain amplitude information.

Optionally, the indication information further indicates a start frequency and/or an end frequency of the at least one frequency channel number.

It should be understood that, when the indication information does not indicate the start frequency, the radio frequency apparatus may use the start frequency as a default value by default. Similarly, when the indication information does not indicate the end frequency, the radio frequency apparatus may use the end frequency as a default value by default.

The frequency domain amplitude information may include information about a frequency domain amplitude corresponding to a frequency channel number between the start frequency and the end frequency.

In this way, the radio frequency apparatus may determine the frequency domain amplitude information based on the indication information, or determine, based on the indication information, a frequency domain amplitude of a specific frequency channel number or specific frequency channel numbers that need to be sent to the control apparatus.

Optionally, the indication information further indicates the radio frequency apparatus to divide the time domain data into a plurality of data packets to be sent periodically.

Further, when sending the time domain data to the control apparatus, the radio frequency apparatus may divide the time domain data into the plurality of data packets, and for each data packet, time domain data is sent to the control apparatus in a time periodicity at a fixed interval.

Optionally, the indication information further indicates a data amount of data packets, and/or the indication information further indicates a sending periodicity of the plurality of data packets.

For example, the control apparatus may determine a data amount and/or a sending periodicity of each data packet based on a data forwarding capability of the control apparatus, and indicate the data amount and/or the periodicity based on the indication information. The radio frequency apparatus uploads the time domain data in a form of the packets based on the data amount and/or the periodicity. The periodicity may be a time interval between successively sent data packets.

In this way, the radio frequency apparatus may upload the time domain data in the form of the packets based on the indication information, thereby improving reliability of data transmission.

In a possible implementation, when determining the frequency domain amplitude information, the radio frequency apparatus may perform gain compensation on the frequency domain data converted from the time domain data. In this case, the method further includes step S202, which is described below.

Optionally, S202: The radio frequency apparatus determines the frequency domain amplitude information based on the indication information and gain compensation information.

The gain compensation information includes at least one of the following information: gain compensation corresponding to each of the at least one frequency channel number, and mean gain compensation corresponding to the time domain data.

For the gain compensation corresponding to the frequency channel number, the radio frequency apparatus may perform gain compensation on each frequency channel number based on a characteristic of each frequency channel number. For example, the radio frequency apparatus stores the gain compensation information corresponding to each frequency channel number, and the gain compensation information corresponding to each frequency channel number is related to a hardware characteristic corresponding to each frequency channel number. For example, due to a limitation of a hardware manufacturing process, the radio frequency apparatus may have different gain compensation on different frequency channel numbers. To ensure that accuracy of the frequency domain amplitude of each frequency channel number is consistent, the radio frequency apparatus may obtain gain compensation of each frequency channel number during equipment testing, to form the gain compensation information.

For the mean gain compensation corresponding to the time domain data, the radio frequency apparatus may perform the mean gain compensation on all the frequency channel numbers based on an environment characteristic that exists when the time domain data is collected. For example, different temperatures and humidity may correspond to different mean gain compensation. The radio frequency apparatus may monitor an environment characteristic in real time, and determine the mean gain compensation based on the environment characteristic. Therefore, if the environment characteristic changes when the time domain data is collected, the mean gain compensation also changes accordingly.

Therefore, the radio frequency apparatus may perform the gain compensation when the frequency domain amplitude information is generated based on a hardware factor or an environment factor, to improve accuracy of information transmission.

S203: The radio frequency apparatus sends the frequency domain amplitude information to the control apparatus, and correspondingly, the control apparatus receives the frequency domain amplitude information from the radio frequency apparatus.

The frequency domain amplitude information includes information about a frequency domain amplitude corresponding to each of at least one corresponding frequency channel number for collecting the time domain data.

The radio frequency apparatus determines the frequency domain amplitude information, and may send the frequency domain amplitude information to the control apparatus through a fronthaul interface between the radio frequency apparatus and the control apparatus.

The frequency domain amplitude information may be a list. For example, the list includes a frequency channel number, a frequency domain amplitude, and a correspondence between the frequency channel number and the frequency domain amplitude. The frequency domain amplitude information may also include frequency domain amplitudes arranged in sequence. For example, the frequency domain amplitudes are arranged in a sequence from a start frequency to an end frequency, and the control apparatus may determine a correspondence between the frequency channel number and a frequency domain amplitude based on the sequence.

The frequency domain amplitude information may be used for determining whether interference exists.

For example, the control apparatus may display the frequency channel number and the frequency domain amplitude of the frequency channel number in real time based on the frequency domain amplitude information, and indicate, depending on whether an abnormal value exists in the presented frequency domain amplitude, whether interference exists.

Optionally, the control apparatus draws a spectrum diagram based on the frequency domain amplitude information, where the spectrum diagram indicates whether interference exists.

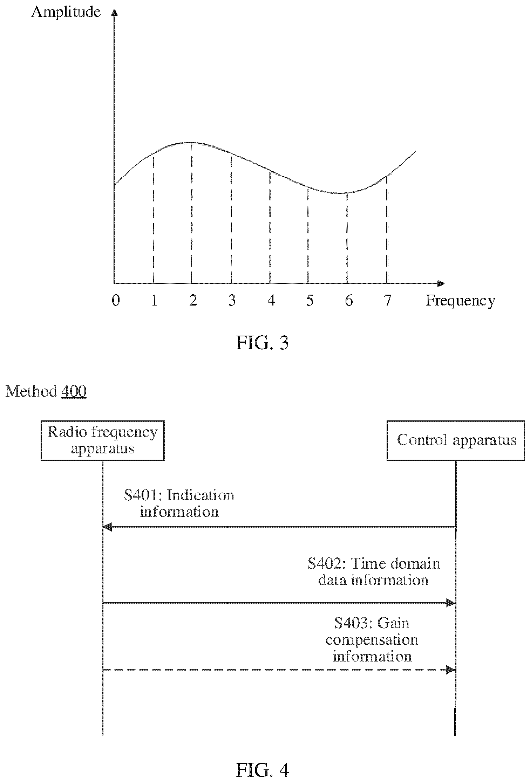

For clarity, the frequency domain amplitude information is described by using an example with reference to FIG. 3. Refer to FIG. 3. The control apparatus receives the frequency domain amplitude information, and draws a spectrum diagram shown in FIG. 3. A horizontal coordinate is a frequency channel number corresponding to a collection point. A vertical coordinate is a frequency domain amplitude corresponding to each frequency channel number. The control apparatus indicates whether interference exists, depending on whether there is a peak on the spectrum diagram, whether there is an abnormal fluctuation, and whether there is a parameter (for example, a frequency domain amplitude, a difference between frequency domain amplitudes of different frequency channel numbers, and an increase in the frequency domain amplitude) that is not within a normal value range.

The frequency domain amplitude information may be further used for determining a type of interference.

For example, if a peak appears on a spectrum diagram corresponding to the frequency domain amplitude information, the frequency domain amplitude information may indicate that narrowband interference exists.

Therefore, the frequency domain amplitude information received by the control apparatus may be used for assisting in determining whether interference exists and a type of interference, thereby improving communication reliability.

Optionally, the frequency domain amplitude information further indicates a channel corresponding to the time domain data. For example, the frequency domain amplitude information may include an antenna identifier or a channel identifier corresponding to the time domain data.

Therefore, the radio frequency apparatus may collect the time domain data based on the indication information, convert the collected time domain data into frequency domain data to generate frequency domain amplitude information, and send the frequency domain amplitude information to the control apparatus. In this way, interference detection can be implemented, and communication efficiency is improved.

In a possible implementation, the radio frequency apparatus may send the time domain data in a form of packets to the control apparatus. In this case, the method 200 further includes step S204. This is described below.

Optionally, S204: The radio frequency apparatus sends the time domain data to the control apparatus, and correspondingly, the control apparatus receives the time domain data from the radio frequency apparatus.

The radio frequency apparatus may send the time domain data to the control apparatus through a fronthaul interface between the radio frequency apparatus and the control apparatus.

When the indication information further indicates the radio frequency apparatus to divide the time domain data into a plurality of data packets to be sent periodically, the radio frequency apparatus may divide the time domain data into the plurality of data packets based on the indication information, and periodically send the plurality of data packets to the control information. For example, the radio frequency apparatus may learn, based on the indication information, that the time domain data needs to be uploaded in the form of the packets, and the radio frequency apparatus may further determine a periodicity that the plurality of data packets are sent periodically and a data amount of the data packet.

When the indication information further indicates the periodicity and/or the data amount of the data packet, the radio frequency apparatus uploads the time domain data in the form of the packets based on the data amount and/or the periodicity. For example, the radio frequency apparatus assembles, based on an indication, 1024-bit data into a data packet in a time sequence, and sends a data packet at an interval of 50 milliseconds in sequence.

Therefore, in this embodiment of this application, the radio frequency apparatus may collect the time domain data based on the indication information, convert the time domain data obtained by collecting the time domain data into the frequency domain data, to generate the frequency domain amplitude information, and send the frequency domain amplitude information to the control apparatus. In this way, interference detection can be implemented, and communication efficiency is improved.

FIG. 4 is a schematic flowchart of an information transmission method 400 according to an embodiment of this application.

S401: A control apparatus sends indication information to a radio frequency apparatus, and correspondingly, the radio frequency apparatus receives the indication information from the control apparatus.

The indication information indicates the radio frequency apparatus to collect time domain data. In other words, the indication information indicates the radio frequency apparatus to start spectrum scanning on the time domain data.

A manner in which the indication information indicates the radio frequency apparatus to collect time domain data is similar to that described in the method 200. For simplicity, details are not described herein again.

Optionally, the indication information further indicates a collection frequency for collecting the time domain data and/or a quantity of collection points for collecting the time domain data. A manner in which the indication information indicates a collection frequency and/or a quantity of collection points is similar to that described in the method 200. For simplicity, details are not described herein again.

Optionally, the indication information further indicates a channel corresponding to the time domain data. A manner in which the indication information indicates a channel is similar to that described in the method 200. For simplicity, details are not described herein again.

Optionally, the indication information may further indicate the radio frequency apparatus to divide the time domain data into a plurality of data packets to be sent periodically. A manner in which the indication information indicates a plurality of data packets to be sent periodically is similar to that described in the method 200. For simplicity, details are not described herein again.

Optionally, the indication information may further indicate a sending periodicity of the plurality of data packets, and/or the indication information further indicates a data amount of the data packet. A manner in which the indication information indicates a periodicity and/or a data amount is similar to that described in the method 200. For simplicity, details are not described herein again.

S402: The radio frequency apparatus sends time domain data information to the control apparatus, and correspondingly, the control apparatus receives the time domain data information from the radio frequency apparatus.

The time domain data information includes the time domain data. The time domain data information is used for determining a frequency domain amplitude corresponding to at least one frequency channel number.

Optionally, the time domain data information further includes at least one of the following: a frequency for collecting the time domain data, a start frequency for collecting the time domain data, an end frequency for collecting the time domain data, a data format of the time domain data, a channel identifier corresponding to the time domain data, and an antenna identifier corresponding to the time domain data.

The frequency for collecting the time domain data, the start frequency for collecting the time domain data, and the end frequency for collecting the time domain data may be used for determining a frequency channel number corresponding to the collection point. For example, the control apparatus may determine the frequency channel number based on the frequency, the start frequency, or the end frequency in a process of converting the time domain data into frequency domain data. It should be understood that when the time domain data information does not include the frequency, the start frequency, or the end frequency, the control apparatus may use an agreed value of the frequency, the start frequency, or the end frequency.

It should be noted that, the frequency for collecting the time domain data is information in time domain, and the start frequency and the end frequency are information in frequency domain. When collecting time domain data, the radio frequency apparatus may determine, based on a collection point, a start frequency and an end frequency of a frequency channel number corresponding to the collection point.

The data format of the time domain data may be a bit length and a composition manner of the time domain data. For example, when the time domain data is IQ data, the time domain data information may indicate a composition manner of an I component and a Q component of the time domain data, and a quantity of bits occupied by each of the I component and the Q component, so that the control apparatus may parse the time domain data based on the data format, to obtain the frequency domain amplitude.

The channel identifier corresponding to the time domain data and the antenna identifier corresponding to the time domain data may indicate a specific channel or specific channels on which the radio frequency apparatus collects the time domain data.

Therefore, the radio frequency apparatus collects the time domain data, determines the time domain data information, and sends the time domain data information to the control apparatus. The control apparatus determines the frequency domain amplitude based on the time domain data information.

The frequency domain amplitude of the at least one frequency channel number may be used for determining whether interference exists. The manner of determining, based on the frequency domain amplitude of the at least one frequency channel number, whether interference exists is similar to that described in the method 200. For simplicity, details are not described herein again.

The frequency domain amplitude of the at least one frequency channel number may be further used for determining a type of interference. A manner in which the frequency domain amplitude of the at least one frequency channel number is used for determining the type of interference is similar to that described in the method 200. For simplicity, details are not described herein again.

In a possible manner, the control apparatus may perform gain compensation when determining the frequency domain amplitude of the at least one frequency channel number. In this case, the method further includes step S403.

Optionally, S403: The radio frequency apparatus sends gain compensation information to the control apparatus, and correspondingly, the control apparatus receives the gain compensation information from the radio frequency apparatus.

The gain compensation information is used for determining the frequency domain amplitude. The gain compensation information may include at least one of the following information: gain compensation corresponding to each of the at least one frequency channel number, and mean gain compensation corresponding to the time domain data. In this case, the control apparatus determines the frequency domain amplitude based on the time domain data information and the gain compensation information.

Descriptions of the gain compensation information are similar to descriptions of the gain compensation information in step S203 in the method 200. For simplicity, details are not described herein again.

Optionally, the gain compensation information includes an antenna identifier or a channel identifier. Further, the control apparatus may select, from the gain compensation information, gain compensation information of a channel corresponding to the time domain data, to perform gain compensation.

It should be understood that the radio frequency apparatus may split the gain compensation information into a plurality of pieces of information for sending. For example, when the mean gain compensation changes with an environment for collecting time domain data, the radio frequency apparatus may send, along with the time domain data information, gain compensation information including corresponding mean gain compensation generated when the time domain data is collected this time.

Therefore, the control apparatus may perform, based on the received gain compensation information, gain compensation when determining the frequency domain amplitude, thereby improving reliability of information transmission.

Therefore, in this embodiment of this application, the radio frequency apparatus may collect the time domain data based on the indication information sent by the control apparatus, to generate the time domain data information, and send the time domain data information to the control apparatus. The control apparatus may determine a frequency domain amplitude based on the time domain data information. In this way, interference detection can be implemented, and communication efficiency is improved.

It should be understood that, in all embodiments of this application, information such as the indication information, the frequency domain amplitude information, the gain compensation information, and the time domain data information may all be split into a plurality of pieces of information for sending. This is not particularly limited in this application.

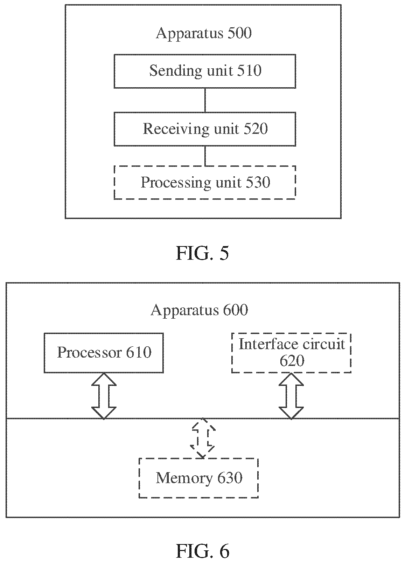

FIG. 5 and FIG. 6 each are a schematic diagram of a structure of a possible apparatus according to an embodiment of this application. These apparatuses may be configured to implement the functions of the radio frequency apparatus and the control apparatus in the foregoing method embodiments, and therefore can also achieve beneficial effects of the foregoing method embodiments. In this embodiment of this application, the apparatuses may be a radio frequency apparatus and a control apparatus, or may be modules (such as chips) used in the radio frequency apparatus and the control apparatus.

As shown in FIG. 5, an apparatus 500 includes a sending unit 510 and a receiving unit 520. Optionally, the apparatus 500 further includes a processing unit 530. The apparatus 500 is configured to implement the functions of the radio frequency apparatus in the method embodiment shown in FIG. 2. Alternatively, the apparatus 500 may include a module configured to implement any function or operation of the radio frequency apparatus in the method embodiment shown in FIG. 2. The module may be completely or partially implemented by using software, hardware, firmware, or any combination thereof.

When the apparatus 500 is configured to implement the functions of the radio frequency apparatus in the method embodiment shown in FIG. 2, the receiving unit 520 is configured to receive indication information. The indication information indicates the radio frequency apparatus to collect time domain data. The sending unit 510 is configured to send frequency domain amplitude information to the control apparatus in response to the indication information. The frequency domain amplitude information includes information about a frequency domain amplitude corresponding to each of at least one corresponding frequency channel number for collecting the time domain data. Optionally, the processing unit 530 is configured to generate the frequency domain amplitude information.

For more detailed descriptions of the sending unit 510, the receiving unit 520, and the processing unit 530, refer directly to related descriptions in the method embodiment shown in FIG. 2. Details are not described herein again.

When the apparatus 500 is configured to implement the functions of the control apparatus in the method embodiment shown in FIG. 2, the sending unit 510 is configured to send indication information to the radio frequency apparatus. The indication information indicates to collect time domain data. The receiving unit 520 is configured to receive, from the radio frequency apparatus, frequency domain amplitude information in response to the indication information, where the frequency domain amplitude information includes information about a frequency domain amplitude corresponding to each of at least one corresponding frequency channel number for collecting the time domain data. Optionally, the processing unit 530 is configured to generate the indication information.

For more detailed descriptions of the sending unit 510, the receiving unit 520, and the processing unit 530, refer directly to related descriptions in the method embodiment shown in FIG. 2. Details are not described herein again.

Therefore, in this application, the radio frequency apparatus may collect the time domain data based on the indication information, convert the time domain data into frequency domain data to generate the frequency domain amplitude information, and send the frequency domain amplitude information to the control apparatus. In this way, interference detection can be performed based on the frequency domain amplitude information, and communication efficiency is improved.

When the apparatus 500 is configured to implement the functions of the radio frequency apparatus in the method embodiment shown in FIG. 4, the receiving unit 520 is configured to receive indication information from the control apparatus. The indication information indicates the radio frequency apparatus to collect time domain data. The sending unit 510 is configured to send time domain data information to the control apparatus in response to the indication information, where the time domain data information includes the time domain data, and the time domain data information is used for determining a frequency domain amplitude of at least one frequency channel number. Optionally, the processing unit 530 is configured to generate the time domain data information.

For more detailed descriptions of the sending unit 510, the receiving unit 520, and the processing unit 530, refer directly to related descriptions in the method embodiment shown in FIG. 2. Details are not described herein again.

When the apparatus 500 is configured to implement the functions of the control apparatus in the method embodiment shown in FIG. 4, the sending unit 510 is configured to send indication information to the radio frequency apparatus. The indication information indicates to collect time domain data. The receiving unit 520 is configured to receive, from the radio frequency apparatus, time domain data information that responds to the indication information. The time domain data information includes the time domain data. The time domain data information is used for determining a frequency domain amplitude of at least one frequency channel number. Optionally, the processing unit 530 is configured to generate the indication information.

Therefore, in this embodiment of this application, the radio frequency apparatus may collect the time domain data based on the indication information sent by the control apparatus, and send generated time domain data information to the control apparatus. The control apparatus may convert the time domain data into frequency domain data to generate the frequency domain amplitude of the at least one frequency channel number. In this way, interference detection can be performed based on the frequency domain amplitude, and communication efficiency is improved.

For more detailed descriptions of the sending unit 510, the receiving unit 520, and the processing unit 530, refer directly to related descriptions in the method embodiment shown in FIG. 2. Details are not described herein again.

As shown in FIG. 6, an apparatus 600 includes a processor 610, and optionally further includes an interface circuit 620. The processor 610 and the interface circuit 620 are coupled to each other. It may be understood that the interface circuit 620 may be a transceiver or an input/output interface. Optionally, the apparatus 600 may further include a memory 630, configured to store instructions executed by the processor 610, store input data needed by the processor 610 to run the instructions, or store data generated after the processor 610 runs the instructions.

When the apparatus 600 is configured to implement the functions of the radio frequency apparatus in the method embodiment in FIG. 2, the processor 610 is configured to implement the functions of the processing unit 530, and the interface circuit 620 is configured to implement the functions of the sending unit 510 and the receiving unit 520.

When the apparatus 600 is configured to implement the functions of the control apparatus in the method embodiment in FIG. 2, the processor 610 is configured to implement the functions of the processing unit 530, and the interface circuit 620 is configured to implement the functions of the sending unit 510 and the receiving unit 520.

When the apparatus 600 is configured to implement the functions of the radio frequency apparatus in the method embodiment in FIG. 4, the processor 610 is configured to implement the functions of the processing unit 530, and the interface circuit 620 is configured to implement the functions of the sending unit 510 and the receiving unit 520.

When the apparatus 600 is configured to implement the functions of the control apparatus in the method embodiment in FIG. 4, the processor 610 is configured to implement the functions of the processing unit 530, and the interface circuit 620 is configured to implement the functions of the sending unit 510 and the receiving unit 520.

It may be understood that, the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The memory in this embodiment of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in a network device or a terminal device. Certainly, the processor and the storage medium may exist in the network device or the terminal device as discrete components.

All or a part of the foregoing embodiments may be implemented by software, hardware, firmware, or any combination thereof. When software is used to implement embodiments, all or a part of embodiments may be implemented in a form of a computer program product. The computer program product includes one or more computer programs and instructions. When the computer programs or instructions are loaded and executed on a computer, all or a part of the procedures or functions in embodiments of this application are executed. The computer may be a general-purpose computer, a special-purpose computer, a computer network, a network device, a terminal device, or another programmable apparatus. The computer programs or the instructions may be stored in a computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in embodiments of this application, numbers "first", "second", ... are merely used to distinguish between different objects, for example, to distinguish between different network devices, and constitute no limitation on the scope of embodiments of this application. Embodiments of this application are not limited thereto.

It should be further understood that in this application, "when" and "if" both refer to corresponding processing performed by the network element in an objective case, are not intended to limit time, do not require a determining action to be performed during implementation of the network element, and do not imply that there is any other limitation.

It should be further understood that, in embodiments of this application, "B corresponding to A" represents that B is associated with A, and B may be determined based on A. However, it should further be understood that determining A based on B does not mean that B is determined based only on A. B may alternatively be determined based on A and/or other information.

It should be understood that the term "and/or" in this specification is merely an association relationship for describing associated objects, and represents that three relationships may exist. For example, A and/or B may represent the following three cases: Only A exists, both A and B exist, and only B exists. In addition, the character "/" in this specification generally indicates an "or" relationship between the associated objects.

A meaning of an expression similar to "an item includes one or more of the following: A, B, and C" appearing in this application, unless otherwise specified, usually means that the item may be any of the following: A; B; C; A and B; A and C; B and C; A, B, and C; A and A; A, A, and A; A, A, and B; A, A and C, A, and B and B; A, C, and C; B and B, B, B and B, B, B and C, and C and C; and C, C and C, and other combinations of A, B and C. The above uses three elements A, B, and C as an example to illustrate optional entries of the item. When the expression is "an item includes at least one of the following: A, B, ..., and X", in other words, when there are more elements in the expression, applicable entries of the item can also be obtained according to the foregoing rule.

It may be understood that numerical numbers involved in embodiments of this application are differentiated merely for ease of description, but are not used to limit the scope of embodiments of this application. Sequence numbers of the foregoing processes do not mean execution sequences. The execution sequences of the processes should be determined based on functions and internal logic of the processes.

## Claims

1. An information transmission method, wherein the method comprises:
receiving, by a radio frequency apparatus, indication information from a control apparatus, wherein the indication information indicates the radio frequency apparatus to collect time domain data; and
sending, by the radio frequency apparatus in response to the indication information, frequency domain amplitude information to the control apparatus, wherein the frequency domain amplitude information comprises information about a frequency domain amplitude corresponding to each of at least one corresponding frequency channel number for collecting the time domain data.

2. The method according to claim 1, wherein the indication information further indicates a collection frequency for collecting the time domain data and/or a quantity of collection points for collecting the time domain data.

3. The method according to claim 1 or 2, wherein the indication information further indicates a start frequency and an end frequency of the at least one frequency channel number.

4. The method according to any one of claims 1 to 3, wherein the indication information further indicates a channel corresponding to the time domain data.

5. The method according to any one of claims 1 to 4, wherein the indication information further indicates the radio frequency apparatus to divide the time domain data into a plurality of data packets to be sent periodically, and the method further comprises:
periodically sending, by the radio frequency apparatus, the plurality of data packets to the control apparatus.

6. The method according to claim 5, wherein the indication information further indicates a sending periodicity of the plurality of data packets, and/or the indication information further indicates a data amount of the data packet.

7. The method according to any one of claims 1 to 6, wherein before the sending, by the radio frequency apparatus in response to the indication information, frequency domain amplitude information to the control apparatus, the method further comprises:
determining, by the radio frequency apparatus, the frequency domain amplitude information based on the indication information and gain compensation information, wherein the gain compensation information comprises at least one of the following information: gain compensation corresponding to each of the at least one frequency channel number, and mean gain compensation corresponding to the time domain data.

8. An information transmission method, wherein the method comprises:
sending, by a control apparatus, indication information to a radio frequency apparatus, wherein the indication information indicates to collect time domain data; and
receiving, by the control apparatus from the radio frequency apparatus, frequency domain amplitude information that responds to the indication information, wherein the frequency domain amplitude information comprises information about a frequency domain amplitude corresponding to each of at least one corresponding frequency channel number for collecting the time domain data.

9. The method according to claim 8, wherein the indication information further indicates a collection frequency for collecting the time domain data and/or a quantity of collection points for collecting the time domain data.

10. The method according to claim 8 or 9, wherein the indication information further indicates a start frequency and an end frequency of the at least one frequency channel number.

11. The method according to any one of claims 8 to 10, wherein the indication information further indicates a channel corresponding to the time domain data.

12. The method according to any one of claims 8 to 11, wherein the indication information further indicates to divide the time domain data into a plurality of data packets to be sent periodically, and the method further comprises:
periodically receiving, by the control apparatus, the plurality of data packets from the radio frequency apparatus.

13. The method according to claim 12, wherein the indication information further indicates a sending periodicity of the plurality of data packets, and/or the indication information further indicates a data amount of the data packet.

14. An information transmission method, wherein the method comprises:
receiving, by a radio frequency apparatus, indication information from a control apparatus, wherein the indication information indicates the radio frequency apparatus to collect time domain data; and
sending, by the radio frequency apparatus in response to the indication information, time domain data information to the control apparatus, wherein the time domain data information comprises the time domain data, and the time domain data information is used for determining a frequency domain amplitude of at least one frequency channel number.

15. The method according to claim 13, wherein the indication information further indicates a collection frequency for collecting the time domain data and/or a quantity of collection points for collecting the time domain data.

16. The method according to claim 14 or 15, wherein the indication information further indicates a channel corresponding to the time domain data.

17. The method according to any one of claims 14 to 16, wherein the indication information further indicates the radio frequency apparatus to divide the time domain data into a plurality of data packets to be sent periodically, and the sending, by the radio frequency apparatus in response to the indication information, time domain data information to the control apparatus comprises:
periodically sending, by the radio frequency apparatus, the plurality of data packets to the control apparatus.

18. The method according to claim 17, wherein the indication information further indicates a sending periodicity of the plurality of data packets, and/or the indication information further indicates a data amount of the data packet.

19. The method according to any one of claims 14 to 18, wherein the method further comprises:
sending, by the radio frequency apparatus, gain compensation information to the control apparatus, wherein the gain compensation information is used for determining the frequency domain amplitude, and the gain compensation information comprises at least one of the following information: gain compensation corresponding to each of the at least one frequency channel number, and mean gain compensation corresponding to the time domain data.

20. The method according to any one of claims 14 to 19, wherein the time domain data information further comprises at least one of the following: a frequency for collecting the time domain data, a start frequency for collecting the time domain data, an end frequency for collecting the time domain data, a data format of the time domain data, a channel identifier corresponding to the time domain data, and an antenna identifier corresponding to the time domain data.

21. An information transmission method, wherein the method comprises:
sending, by a control apparatus, indication information to a radio frequency apparatus, wherein the indication information indicates to collect time domain data; and
receiving, by the control apparatus from the radio frequency apparatus, time domain data information that responds to the indication information, wherein the time domain data information comprises the time domain data, and the time domain data information is used for determining a frequency domain amplitude of at least one frequency channel number.

22. The method according to claim 21, wherein the indication information further indicates a collection frequency for collecting the time domain data and/or a quantity of collection points for collecting the time domain data.

23. The method according to claim 21 or 22, wherein the indication information further indicates a channel corresponding to the time domain data.

24. The method according to any one of claims 21 to 23, wherein the indication information further indicates to divide the time domain data into a plurality of data packets to be sent periodically, and the receiving, by the control apparatus from the radio frequency apparatus, time domain data information that responds to the indication information comprises:
periodically receiving, by the control apparatus, the plurality of data packets from the radio frequency apparatus.

25. The method according to claim 24, wherein the indication information further indicates a sending periodicity of the plurality of data packets, and/or the indication information further indicates a data amount of the data packet.

26. The method according to any one of claims 21 to 25, wherein the method further comprises:
receiving, by the control apparatus, gain compensation information from the radio frequency apparatus, wherein the gain compensation information is used for determining the frequency domain amplitude, and the gain compensation information comprises at least one of the following information: gain compensation corresponding to each of the at least one frequency channel number, and mean gain compensation corresponding to the time domain data.

27. The method according to any one of claims 21 to 26, wherein the time domain data information further comprises at least one of the following: a frequency for collecting the time domain data, a start frequency for collecting the time domain data, an end frequency for collecting the time domain data, a data format of the time domain data, a channel identifier corresponding to the time domain data, and an antenna identifier corresponding to the time domain data.

28. A radio frequency apparatus, comprising at least one unit configured to perform the method according to any one of claims 1 to 7.

29. A control apparatus, comprising at least one unit configured to perform the method according to any one of claims 8 to 13.

30. A radio frequency apparatus, comprising at least one unit configured to perform the method according to any one of claims 14 to 20.

31. A control apparatus, comprising at least one unit configured to perform the method according to any one of claims 21 to 27.

32. A communication apparatus, comprising a processor, wherein the processor is coupled to a memory, the memory is configured to store a computer program or instructions, and the processor is configured to execute the computer program or the instructions, to implement the method according to any one of claims 1 to 7, claims 8 to 13, claims 14 to 20, or claims 21 to 27.

33. An information transmission system, comprising the radio frequency apparatus according to claim 28 and the control apparatus according to claim 29, or the radio frequency apparatus according to claim 30 and the control apparatus according to claim 31.
